# EUROPÄISCHE PATENTSCHRIFT

(11) **EP 2 213 489 B1**
(45) Veröffentlichungstag und Bekanntmachung des Hinweises auf die Patenterteilung: **18.09.2013**
(21) Anmeldenummer: 09179580.7
(22) Anmeldetag: 17.12.2009
(51) Int. Cl.: B60G 21/055

(54) **Getriebemotor für einen aktiven Wankstabilisator**
Gear motor for an active stabiliser
Moteur à engrenage pour une barre stabilisatrice active

(30) Priorität: 28.01.2009 DE 102009006385
(43) Veröffentlichungstag der Anmeldung: 04.08.2010
(73) Patentinhaber: Schaeffler Technologies AG & Co. KG, 91074 Herzogenaurach (DE)
(72) Erfinder: Grau, Ulrich, 91448, Emskirchen (DE); Mayer, Ralf, 91074 Herzogena, 91074 Herzogenaurach (DE)

(56) Entgegenhaltungen:
- EP-A1- 1 627 757
- EP-A1- 1 785 294
- EP-A1- 2 011 674
- DE-A1- 10 148 095
- FR-A1- 2 751 803
- FR-A1- 2 874 860

## Beschreibung

Die vorliegende Erfindung betrifft einen aktiven Wankstabilisator mit einem Schwenkmotor, wie er in modernen Kraftfahrzeugen zur Vermeidung von Wankbewegungen des Fahrzeugaufbaus eingesetzt wird. Der aktive Wankstabilisator wird hier gezielt zum Auf - und Abbau von Kräften eingesetzt, die dem Wanken entgegenwirken.

Aus DE 10 2005 031 414 A1 beispielsweise ist ein Schwenkmotor zum Ausgleich von Fahrzeugbewegungen bekannt geworden, wobei dieser Schwenkmotor in einem Stabilisator angeordnet und mit den zwei aufeinander zuweisenden Enden einer ersten Stabilisatorhälfte und einer zweiten Stabilisatorhälfte verbunden ist.

Aus EP 2 011 674 A1 war ein aktiver Wankstabilisator nach den Merkmalen des Oberbegriffs des Anspruchs 1 bekannt.

Insbesondere bei Geradeausfahrten und einseitigem Federn - z.B. beim Durchfahren von unebenen Fahrbahnen - kann sich ein Störverhalten derartiger aktiver Wankstabilisatoren nachteilig auswirken. Ursächlich für dieses Störverhalten ist hier die Relativdrehung zwischen den beiden Stabilisatorhälften bei geringen Drehmomenten und hohen Frequenzen, die auf den Schwenkmotor übertragen werden.

Aufgabe der vorliegenden Erfindung war es, einen aktiven Wankstabilisator nach den Merkmalen des Oberbegriffs des Anspruchs 1 anzugeben, bei dem ein Störverhalten des aktiven Wankstabilisators deutlich verringert ist.

Erfingdungsgemäß wurde diese Aufgabe durch den aktiven Wankstabilisator gemäß Anspruch 1 gelöst. Dadurch, dass zwischen dem Antrieb und der einen Stabilisatorhälfte ein Torsionselement wirksam angeordnet ist, dessen Drehsteifigkeit geringer als die Drehsteifigkeit des Stabilisators ist, ist sichergestellt, dass geringe Relativdrehungen zwischen den beiden Stabilisatorhälften zugelassen werden, ohne dass nennenswerte Bewegungen im Schwenkmotor zwischen Antrieb und Gehäuse oder Stator einsetzen. Erfindungsgemäß ist der im Stand der Technik vorgesehene starre Anschluss zwischen Stabilisatorhälfte und Antrieb des Schwenkrnotors durch das erfindungsgemäße Torsionselement unterbrochen. Zwischen den beiden Stabilisatörhälften ist erfindungsgemäß ein Steifigkeitssprung vorgesehen, so dass zwischen den beiden Stabilisatorhälften mit vergleichsweise großen Drehsteifigkeiten ein Element mit geringerer Drehsteifigkeit Verdrehungen zwischen den beiden Stabilisatorhälften ohne nennenswerte Verdrehung am zwischengeschalteten Schwenkmotor ermöglicht.

Statorseitig kann der Schwenkmotor an die eine Stabilisatorhälfte angeschlossen sein. Statorseitig kann ein Gehäuse vorgesehen sein, in dem der Rotor drehbar gelagert ist. Dieses Gehäuse kann an die eine Stabilisatorhälfte angeschlossen sein. Die beiden Stabilisatorhälften können gleich lang, aber auch unterschiedlich lang ausgebildet sein.

Bei Überschreitung eines vorgegebenen Verdrehwinkels der beiden Stabilisatorhälften kann bei einer erfindungsgemäßen Weiterbildung der Kraftfluss oder Momentenfluss zwischen den beiden Stabilisatorhälften über den Schwenkmotor übertragen werden, ohne dass es zu einer weiteren Belastung des zwischengeschalteten Torsionselementes kommt.

Es ist aber auch erfindungsgemäß möglich, dass Torsionselement so zu gestalten, dass über den gesamten Verdrehwinkel und Belastungsbereich des Stabilisators die Belastung über das Torsionselement geleitet werden kann. In diesem Fall ist das Torsionselement mit einer progressiven Drehsteifigkeitskennlinie versehen, so dass ab einem vorbestimmten Verdrehwinkel das Torsionselement steifer ist als die angeschlossenen Stabilisatorhälften.

Vorzugsweise ist das Torsionselement innerhalb eines Motorgehäuses des Schwenkmotors untergebracht. Bei dieser erfindungsgemäßen Weiterbildung kann der Schwenkmotor einbaufertig an das Kraftfahrzeug montiert und an die vorbereiteten Stabilisatorhälften angeschlossen werden. In diesem Fall ist das Torsionselement auch vor äußeren Einflüssen geschützt.

Das Torsionselement ist mit wenigstens einem Federelement, insbesondere ein federelastisch umformbares Formstück versehen, das unter Torsionsbeanspruchung der beiden Stabilisatorhälften auf Zug, Druck oder Torsion belastet wird.

Das Torsionselement ist erfindungsgemäß einerseits mit einem Antriebsteil des Antriebes des Schwenkmotors und andererseits mit einem Anschlussteil der einen Stabilisatorhälfte versehen, wobei zwischen dem Antriebsteil und dem Anschlussteil ein Federelement für eine federelastische Relatiwerdrehung zwischen dem Antriebsteil und dem Anschlussteil wirksam angeordnet ist. Zwischen das Antriebsseil und das Anschlussteil können beispielsweise Druckfedem geschaltet werden, die einerseits an Anlageflächen des Antriebsteiles und die andererseits an Anlageflächen des Anschlussteils abgestützt sind.

Erfindungsgemäß ist das Anschlussteil an einem Motorgehäuse des Schwenkmotors über eine für die Übertragung von Kippmomenten vorgesehene Lagerung drehbar gelagert. In vielen Fällen ist das Motorgehäuse fest mit der einen Stabilisatorhälfte verbunden - beispielsweise mittels einer Schraubverbindung, oder aber auch mittels einer Schweißverbindung. Andererseits kann das Anschlussteil fest mit der anderen Stabilisatorhälfte verbunden sein. Unter Torsionsbelastungen können in den Stabilisator Querkräfte eingeleitet werden, wobei bei dieser erfindungsgemäßen Weiterbildung die Querkräfte einwandfrei über die hier vorgeschlagene Lagerung von der einen auf die andere Stabilisatorhälfte übertragen werden. Für derartige Lagerungen bieten sich insbesondere Schrägkugellager in O-Anordnung an. Bei O-Anordnungen liegen die Druckmittelpunkte der Lagerung in weitem Abstand voneinander auf den voneinander abgewandten Seiten der Schrägkugellager, so dass beträchtliche Kippmomente aufgenommen werden können.

Bei einer erfindungsgemäßen Weiterbildung ist das Federelement radial innerhalb der Lagerung angeordnet, also beispielsweise innerhalb eines Laufrings der Lagerung. Bei einer Lagerung in O-Anordnung können weiterhin die Federelemente axial innerhalb dieser Lagerung untergebracht werden, und zwar insbesondere innerhalb der Druckmittelpunkte, so dass sichergestellt ist, das die hier verwendeten Federelemente ausschließlich Drehmomente zwischen den beiden Stabilisatorhälften übertragen, jedoch keine Querkräfte oder Kippmomente.

Vorzugsweise sind das Anschlussteil und das Antriebsteil mit umfangsseitig um eine Drehachse herum hintereinander angeordneten und ineinander greifenden Stegen versehen, die insbesondere als Klauen oder Lamellen ausgebildet sein können. Zwischen diesen ineinander greifenden Stegen sind die Federelemente angeordnet. Bei erfindungsgemäßen Schwenkmotoren kann die Rotationsachse des Schwenkmotors mit der Drehachse des Stabilisators zusammenfallen.

Zwischen diese ineinandergreifenden Stege können die als federelastisch umformbare Formstücke ausgebildeten Federelemente in den Umfangsrichtungen spielfrei angeordnet sein. Beispielsweise können hier Formstücke aus elastomeren Material, beispielsweise Gummimischungen eingesetzt werden. Bei derartigen erfindungsgemäßen Weiterbildungen ist neben dem erwünschten Steifigkeitssprung zugleich der Geräuschpfad an der Antriebsseite des Schwenkmotors zu der einen Stabilisatorhälfte, und somit zum Radträger unterbrochen.

Die von den ineinander greifenden Stegen gebildeten Taschen zur Aufnahme der federelastisch umformbaren Formstücke können Ausweichräume zur Aufnahme von umgeformten Material der Formstücke aufweisen. Wenn beispielsweise bei einer Verdrehung der beiden Stabilisatorhälften zwei ineinander greifende Stege einander annähern, wird das dazwischen liegende Formstück verformt, wobei die verformten Bereiche des Formstücks in die bereitstehenden Ausweichräume hinein gedrängt werden. Bei dieser Formänderungsarbeit werden diese Formstücke zunehmend steifer, vorzugsweise progressiv steifer.

Bei einer erfindungsgemäßen Weiterbildung können diese Ausweichräume so beschaffen sein, dass sie weitgehend ausgefüllt werden von den verdrängten Bereichen der federelastisch verformten Formstücke. Wenn die Formstücke inkompressibel sind, verhalten sich das Anschlussteil und das Antriebsteil bei einer weiteren Momentenübertragung wie ein einzelnes starres Bauteil, wenn die Ausweichräume verdrängt sind.

Nachstehend wird die Erfindung anhand eines in insgesamt 7 Figuren abgebildeten Ausführungsbeispieles näher erläutert. Es zeigen:
- Figur 1: einen erfindungsgemäßen aktiven Wankstabilisator, eingebunden in einem geteilten Stabilisator
- Figur 2: den aktiven Wankstabilisator aus Figur 1 im Längsschnitt
- Figur 3: den aktiven Wankstabilisator im Querschnitt
- Figur 4: ein Einzelteil des aktiven Wankstabilisators in perspektivischer Darstellung
- Figur 5: ein weiteres Einzelteil des aktiven Wankstabilisators in perspektivischer Darstellung
- Figur 6: ein weiteres Einzelteile des erfindungsgemäßen aktiven Wankstabilisators in perspektivischer Darstellung und
- Figur 7: die Kennlinie der Drehsteifigkeit des aktiven Wankstabilisators.

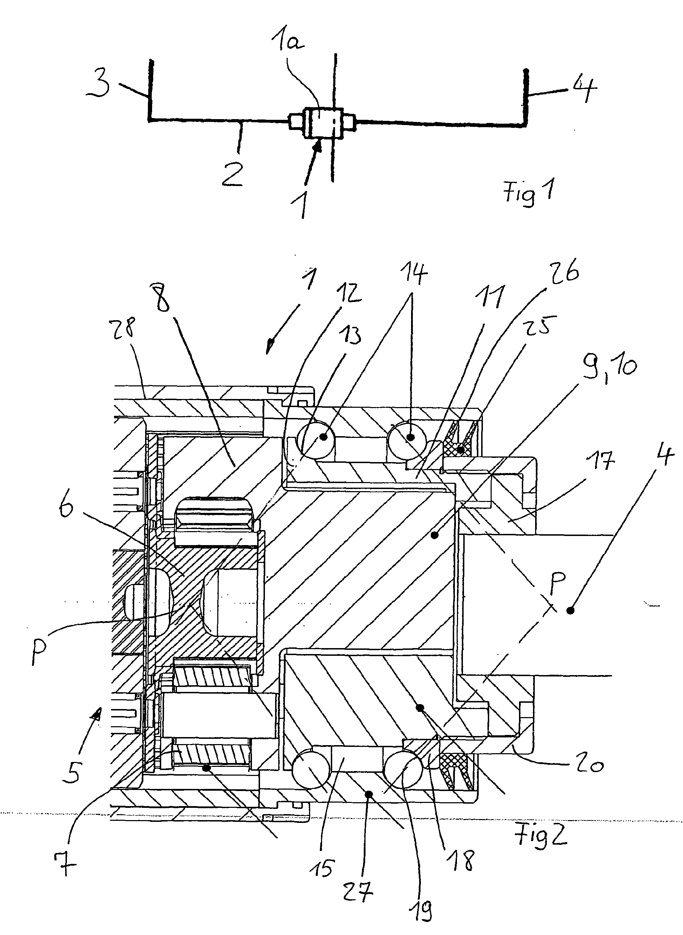

Figur 1 zeigt in schematischer Darstellung einen erfindungsgemäßen aktiven Wankstabilisator mit einem Schwenkmotor 1. Der Schwenkmotor 1 ist an einen geteilten Stabilisator 2 angeschlossen. Der Stabilisator 2 weist zwei Stabilisatorhälften 3,4 auf, wobei die eine Stabilisatorhälfte 3 statorseitig an ein Motor gehäuse 1a drehfest angeschlossen ist. Die andere Stabilisatorhälfte 4 ist mit ihrem freien Ende in den Schwenkmotor 1 hineingeführt und an den hier nicht abgebildeten Antrieb angeschlossen.

Figur 2 zeigt im Längsschnitt den aktiven Wankstabilisator aus Figur 1, wobei hier ein Ausschnitt eines Planetengetriebes 5 am Antrieb des Schwenkmotors 1 dargestellt ist. Ein Sonnenrad 6 kämmt mit Planetenrädern 7, die an einem Planetenträger 8 drehbar gelagert sind. Ein Antriebsteil 9 ist einstückig an dem Planetenträger 8 angeformt.

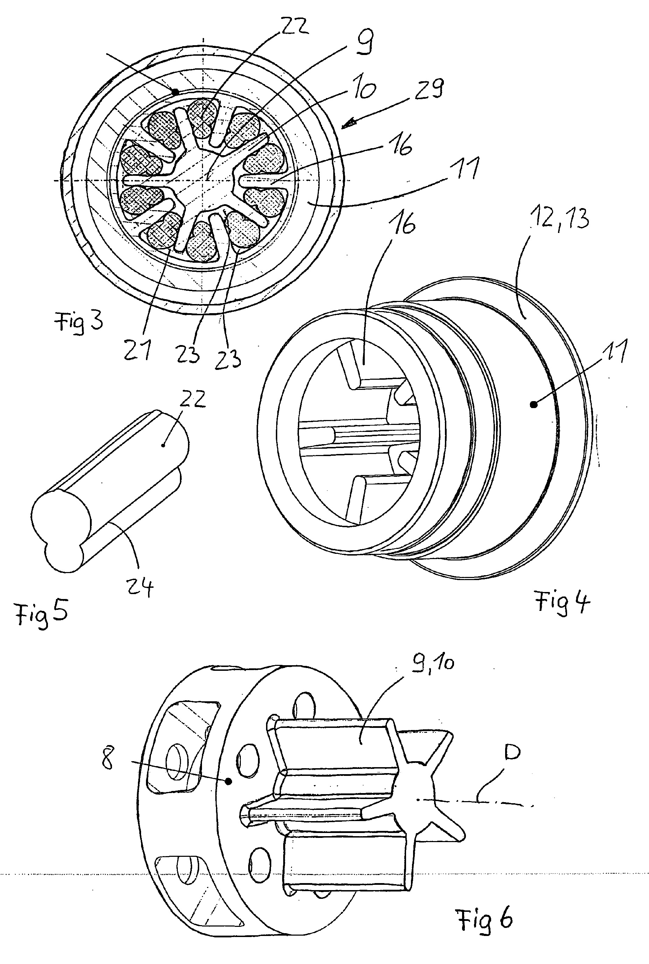

Der Planetenträger 8 mit dem einstückig angeformten Antriebsteil 9 ist deutlich in der Figur 6 in perspektivischer Darstellung abgebildet. Hier ist zu erkennen, das das Antriebsteil 9 mit einer Vielzahl von in Umfangsrichtung um eine Drehachse D hintereinander angeordneten Stegen 10 versehen ist. Diese Stege 10 sind sternförmig um diese Drehachse D herum angeordnet. Bei einer alternativen Ausführung können der Planetenträger 8 sowie das Antriebsteil 9 auch separate Teile sein, die beispielsweise miteinander verschweißt werden.

Der Figur 2 ist weiterhin zu entnehmen, das das Antriebsteil 9 mit seinen Stegen 10 in ein ringförmiges Anschlussteil 11 eingreift. Dieses Anschlussteil 11 ist in der Figur 4 in perspektivischer Darstellung abgebildet. Das Anschlussteil 11 ist an einem axialen Ende mit einem einstückig angeformten Radialbord 12 versehen, der mit einer Kugelrolle 13 als Laufbahn für Kugeln 14 eines zweireihigen Schrägkugellagers 15 versehen ist.

Das ringförmig ausgebildete Anschlussteil 11 ist an seinem Innenumfang mit einer Vielzahl von in Umfangsrichtung um eine Drehachse herum angeordneten Stegen 16 versehen, wobei die Stege 16 des Anschlussteils 11 und die Stege 10 des Antriebsteiles 9 ineinander greifen, wie der Figur 3 entnehmen ist.

Der Figur 2 ist weiterhin zu entnehmen, das das Anschlussteil 11 über eine Muffe 17 fest mit der Stabilisatorhälfte 4 des Stabilisators 2 verbunden ist.

Am Außenumfang des ringförmig gebildeten Anschlussteils 11 ist ein Lagerring 18 des Schrägkugellagers 15 angeordnet, der ebenfalls mit einer Kugelrille 19 zum Abwälzen der Kugeln 14 versehen ist. Über eine mit dem Anschlussteil 11 verschraubte Spannhülse 20 kann der Lagerring 18 zum Einstellen eines Lagerspiels dieses zweireihigen Schrägkugellagers 15 angestellt werden.

Der Figur 3 kann entnommen werden, dass die ineinander greifenden Stege 10, 16 des Antriebsteiles 9 sowie des Anschlussteils 11 Taschen 21 begrenzen, in denen federelastisch verformbare Formstücke 22 ohne Spiel in den Umfangsrichtungen angeordnet sind. Jedes der Formstücke 22 liegt einerseits an einem der Stege 10 des Antriebsteiles 9 und andererseits an einem der benachbarten Stege 16 des Anschlussteils 11 an. Vorliegend sind diese Formstücke 22 aus einem elastomeren Werkstoff gebildet, der nahezu inkompressibel sein kann.

Der Figur 3 ist zu entnehmen, dass die Taschen 21 größer als die Formstücke 22 ausgebildet sind, so dass Ausweichräume 23 gebildet sind. Unter einer Relatiwerdrehung des Antriebsteiles 9 und des Anschlussteils 11 zueinander wird jede zweite Tasche 21 verkleinert, weil die begrenzenden Stege 10,16 einander annähern. Unter dieser Relativbewegung werden die Formstücke 22 in den sich verkleinernden Taschen 21 verformt. Verformte Abschnitte dieser Formstücke 22 werden in diese Ausweichräume 23 hinein verdrängt. Die Formstücke 22 bilden Druckfedern.

Wenn diese Formstücke 22 elastisch verformbar, jedoch inkompressibel sind, ist bei ausgefüllten Ausweichräumen 23 eine weitere Relativdrehung zwischen dem Antriebsteil 9 und dem Anschlussteil 11 ausgeschlossen; in diesem Drehsinn kann dann nur noch eine gemeinsame Drehbewegung von Anschlussteil 11 und Antriebsteil 9 erfolgen. In dieser Situation verhalten sich das Anschlussteil 11 und das Antriebsteil 9 wie ein einziges starres Bauteil. Eine weitere Verdrehung erfolgt dann nur noch zwischen den beiden Stabilisatorhälften 3,4 in Abhängigkeit von der Drehsteifigkeit des Stabilisators 2.

Das Antriebsteil 9 und das Anschlussteil 11 bilden gemeinsam mit den federelastisch verformbaren Formstücken 23 ein Torsionselement 29. Dieses Torsionselement 29 ist radial innerhalb des Schrägkugellagers 15 angeordnet. Der Figur 2 ist ferner zu entnehmen, dass dieses Torsionselement 29 axial zwischen den beiden Druckpunkten P des Schrägkugellagers 15 angeordnet ist. Die Anzahl von Taschen und demzufolge auch die Anzahl von Stegen und Formstücken sowie die Gestalt der Taschen und Formstücke kann variieren und sind an den jeweiligen Wankstabilisator anzupassen.

Figur 5 zeigt eines der Formstücke 22 in perspektivischer Darstellung. Die Kontur des Formstücks 22 ist an die Geometrie der Taschen 21 angepasst. Dieses Formstück 22 weist eingeschnürte Abschnitte 24 auf, die ebenfalls als Ausweichraum zur Aufnahme von verdrängten Material des Formstücks 22 zur Verfügung stehen.

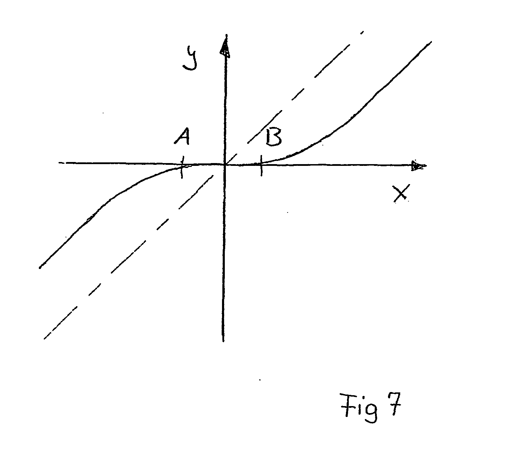

Figur 7 zeigt schematisch das Drehsteifigkeitsverhalten eines erfindungsgemäßem aktiven Wankstabilisators mit Schwenkmotor. Hier ist das Drehmoment (Ordinate) über den Verdrehwinkel (Abszisse) aufgetragen. Hier ist dasjenige Drehmoment bezeichnet, das über den Stabilisator 2 übertragen wird. Dieser Figur ist zu entnehmen, dass dieser aktive Wankstabilisator eine hohe Elastizität bei kleinen Drehmomenten aufweist. Dieser Abschnitt ist in dem Diagramm mit den Punkten A und B gekennzeichnet. Innerhalb dieses Abschnittes sind Relativbewegungen zwischen dem Antriebsteil 9 und dem Anschlussteil 11 unter Verformung der Formstücke 22 ohne Übertragung von nennenswerten Drehmomenten möglich.

Der Figur 7 ist weiterhin zu entnehmen, dass außerhalb dieses Abschnittes A - B die übertragenden Drehmomente progressiv ansteigen. Die Formstücke 22 und die Taschen 21 sind so ausgebildet, das in den progressiven Abschnitten der Kennlinie die Formstücke 22 zwar weiterhin zunehmend verformt werden, wobei jedoch damit eine progressive Steifigkeitserhöhung des Torsionselements 29 einhergeht.

Der erfindungsgemäße aktiven Wankstabilisator umhüllt das Torsionselement 29 vollständig, so dass Fremdstoffe nicht in den Bereich der Taschen 21 und der Formstücke 22 und auch nicht in den Bereich des Schrägkugellagers 15 gelangen können. Zur einwandfreien Abdichtung des Schrägkugellagers 15 ist vorliegend am Außenumfang der Spannhülse 20 ein mehrlippiger Dichtring angeordnet, der mit seinen Dichtlippen 26 gegen den Innenumfang eines Außenringes 27 des Schrägkugellagers 15 angefedert ist. Der Außenring 27 wiederum ist an dem Motorgehäuse 1 a des Schwenkmotors 1 befestigt.

Dadurch, dass das Anschlussteil 11 über das mehrreihige Schrägkugellager 15 gegenüber dem Motorgehäuse 1a kippfest gelagert ist, ist sichergestellt, dass keine Biegemomente und Querkräfte zwischen dem Anschlussteil 11 und dem Antriebsteil 9 übertragen werden.

Durch das Zwischenschalten der aus elastomeren Werkstoff gebildeten Formstücke 22 zwischen das Planetengetriebe 5 und die Stabilisatorhälfte 4 ist ein Geräuschpfad in günstiger Weise unterbrochen.

Bei dem erfindungsgemäßen aktiven Wankstabilisator wurde eine starre Anbindung des Schwenkmotors 1 an die eine Stabilisatorhälfte 4 zu Gunsten einer zunächst drehweichen Anbindung aufgegeben. Insbesondere bei Geradeausfahrten mit einseitigem Federn, insbesondere beim Hindernisfedern macht sich hier das zunächst drehweiche Steifigkeitsverhalten des aktiven Wankstabilisators günstig bemerkbar. Die mit der Erfindung angestrebten Vorteile machen sich vor allem bei kleinen Amplituden und hohen Frequenzen bemerkbar.

Erfindungsgemäße aktive Wankstabilisatoren können einen elektrischen, aber auch einen hydraulischen Antrieb aufweisen. Anders als bei dem Ausführungsbeispiel kann das Torsionselement bei erfindungsgemäßen Varianten außerhalb des Motorgehäuses angeordnet und gegebenenfalls gekapselt ausgeführt sein.

Bei dem Ausführungsbeispiel können zusätzlich zwischen den Stegen wirksame formschlüssige Anschläge vorgesehen werden, so dass ab einem vorbestimmten Verdrehwinkel zwischen dem Antreibsteil und dem Anschlussteil keine weitere Verdrehung zwischen diesen Teilen möglich ist.

### Bezugszeichenliste

- 1: Schwenkmotor
- 1 a: Motorgehäuse
- 2: geteilter Stabil isator
- 3: Stabilisatorhälfte
- 4: Stabilisatorhälfte
- 5: Planetengetriebe
- 6: Sonnenrad
- 7: Planetenrad
- 8: Planetenträger
- 9: Antriebsteil
- 10: Steg
- 11: Anschlussteil
- 12: Radialbord
- 13: Kugelrille
- 14: Kugel
- 15: Schrägkugellager
- 16: Steg
- 17: Muffe
- 18: Lagerring
- 19: Kugelrille
- 20: Spannhülse
- 21: Tasche
- 22: Formstück
- 23: Ausweichraum
- 24: eingeschnürter Abschnitt
- 25: Dichtring
- 26: Dichtlippe
- 27: Außenring
- 28:
- 29: Torsionselement

## Patentansprüche

1. Aktiver Wankstabilisator mit einem Schwenkmotor (1), der mit seinem Antrieb an eine Stabilisatorhälfte (4) und der statorseitig an eine andere Stabilisatorhälfte (3) eines geteilten Stabilisators (2) angeschlossen ist, wobei ein Torsionselement (29) vorgesehen ist, wobei zwischen dem Antrieb und der einen Stabiliatorhälfte (3) das Torsionselement (29) wirksam angeordnet ist, dessen Drehsteifigkeit geringer als die Drehsteifigkeit des Stabilisators ist, wobei das Torsionselement (29) wenigstens ein Federelement, insbesondere ein federelastisch umformbares Formstück (22) aufweist, das unter Torsion auf Zug, Druck, oder Torsion belastet wird, wobei das Torsionselement (29) ein an den Antrieb angeschlossenes Antriebsteil (9) und ein an die eine Stabilisatorhälfte (4) angeschlossenes Anschlussteil (11) sowie das zwischen dem Antriebsteil (9) und dem Anschlussteil (11) wirksam angeordnete Federelement für eine federelastische Relativdrehung zwischen dem Antriebsteil (9) und dem Anschlussteil (11) aufweist, **dadurch gekennzeichnet, dass** das Anschlussteil (11) an einem Motorgehäuse (1a) des Schwenkmotors (1) über eine für die Übertragung von Kippmomenten vorgesehene Lagerung drehbar gelagert ist.

2. Aktiver Wankstabilisator mit einem Schwenkmotor (1) nach Anspruch 1, bei dem das Torsionselement (29) innerhalb eines Motorgehäuses (1a) des Schwenkmotors (1) untergebracht ist.

3. Schwenkmotor (1) nach Anspruch 1, bei dem die Lagerung Schrägkugellager (15) in O-Anordnung aufweist.

4. Schwenkmotor (1) nach Anspruch 1, bei dem das Federelement radial innerhalb der Lagerung untergebracht ist.

5. Schwenkmotor (1) nach Anspruch 1, bei dem das Anschlussteil (11) und das Antriebsteil (9) mit umfangsseitig um eine Drehachse herum hintereinander angeordneten und ineinandergreifenden Stegen (10, 16), insbesondere Klauen oder Lamellen, versehen sind, wobei zwischen ineinandergreifenden Stegen (10, 16) die Federelemente angeordnet sind.

6. Schwenkmotor (1) nach Anspruch 5, bei dem die als federelastisch umformbare Formstücke (22) ausgebildeten Federelemente in den Umfangsrichtungen spielfrei zwischen den ineinandergreifenden Stegen (10, 16) angeordnet sind.

7. Schwenkmotor (1) nach Anspruch 6, bei dem die von den ineinandergreifenden Stegen (10, 16) gebildeten Taschen (21) Ausweichräume (23) zur Aufnahme von federelastisch umgeformtem Material der Formstücke (22) aufweisen.

## Claims

1. Active roll stabilizer having a pivoting motor (1) which is connected with its drive to one stabilizer half (4) and which is connected on the stator side to another stabilizer half (3) of a split stabilizer (2), a torsion element (29) being provided, the torsion element (29) being arranged so as to be active between the drive and the first stabilizer half (3), the torsional rigidity of which torsion element (29) is lower than the torsional rigidity of the stabilizer, the torsion element (29) having at least one spring element, in particular a shaped part (22) which can be deformed resiliently and, under torsion, is subjected to a tensile, compressive or torsional load, the torsion element (29) having a drive part (9), which is connected to the drive, and a connector part (11), which is connected to one stabilizer half (4), and the spring element, which is arranged so as to be active between the drive part (9) and the connector part (11), for a resilient relative rotation between the drive part (9) and the connector part (11), **characterized in that** the connector part (11) is mounted rotatably on a motor housing (1a) of the pivoting motor (1) via a mounting which is provided for the transmission of tilting moments.

2. Active roll stabilizer having a pivoting motor (1) according to Claim 1, in which the torsion element (29) is accommodated within a motor housing (1a) of the pivoting motor (1).

3. Pivoting motor (1) according to Claim 1, in which the mounting has angular-contact ball bearings (15) in an O-arrangement.

4. Pivoting motor (1) according to Claim 1, in which the spring element is accommodated radially within the mounting.

5. Pivoting motor (1) according to Claim 1, in which the connector part (11) and the drive part (9) are provided with webs (10, 16), in particular claws or ribs, which are arranged behind one another on the circumferential side around a rotational axis and engage into one another, the spring elements being arranged between webs (10, 16) which engage into one another.

6. Pivoting motor (1) according to Claim 5, in which the spring elements which are configured as resiliently deformable shaped parts (22) are arranged without play in the circumferential directions between the webs (10, 16) which engage into one another.

7. Pivoting motor (1) according to Claim 6, in which the pockets (21) which are formed by the webs (10, 16) which engage into one another have deflection spaces (23) for receiving resiliently deformed material of the shaped parts (22).

## Revendications

1. Barre stabilisatrice active comprenant un moteur pivotant (1) qui est raccordé par son entraînement à une moitié de barre stabilisatrice (4) et du côté du stator à une autre moitié de barre stabilisatrice (3) d'une barre stabilisatrice divisée (2), un élément de torsion (29) étant prévu, l'élément de torsion (29) étant disposé de manière à agir entre l'entraînement et l'une des moitiés de barre stabilisatrice (3), dont la rigidité en torsion est inférieure à la rigidité en torsion de la barre stabilisatrice, l'élément de torsion (29) présentant au moins un élément de ressort, en particulier une pièce façonnée (22) déformable élastiquement à ressort, qui est sollicitée en traction, pression ou torsion sous l'effet de la torsion, l'élément de torsion (29) présentant une partie d'entraînement (9) raccordée à l'entraînement et une partie de raccordement (11) raccordée à l'une des moitiés de barre stabilisatrice (4) et l'élément de ressort disposé de manière à agir entre la partie d'entraînement (9) et la partie de raccordement (11) pour une rotation relative élastique à ressort entre la partie d'entraînement (9) et la partie de raccordement (11), **caractérisée en ce que** la partie de raccordement (11) est montée de manière rotative sur un carter de moteur (1a) du moteur pivotant (1) par le biais d'un support sur palier prévu pour le transfert de couples de basculement.

2. Barre stabilisatrice active comprenant un moteur pivotant (1) selon la revendication 1, dans laquelle l'élément de torsion (29) est monté à l'intérieur d'un carter de moteur (1a) du moteur pivotant (1).

3. Moteur pivotant (1) selon la revendication 1, dans lequel le support sur palier présente des roulements à billes à contacts obliques (15) suivant un agencement en forme de 0.

4. Moteur pivotant (1) selon la revendication 1, dans lequel l'élément de ressort est monté radialement à l'intérieur du support sur palier.

5. Moteur pivotant (1) selon la revendication 1, dans lequel la partie de raccordement (11) et la partie d'entraînement (9) sont pourvues de nervures (10, 16), en particulier de griffes ou de lamelles, disposées sur la périphérie les unes derrière les autres autour d'un axe de rotation et venant en prise les unes dans les autres, les éléments de ressort étant disposés entre des nervures (10, 16) venant en prise les unes dans les autres.

6. Moteur pivotant (1) selon la revendication 5, dans lequel les pièces façonnées (22) déformables élastiquement à ressort sont disposées dans les directions périphériques sans jeu entre les nervures (10, 16) venant en prise les unes dans les autres.

7. Moteur pivotant (1) selon la revendication 6, dans lequel les cavités (21) formées par les nervures (10, 16) venant en prise les unes dans les autres présentent des espaces de dégagement (23) pour recevoir le matériau déformé élastiquement à ressort des pièces façonnées (22).
